# EUROPÄISCHE PATENTSCHRIFT

(11) **EP 3 380 737 B1**
(45) Veröffentlichungstag und Bekanntmachung des Hinweises auf die Patenterteilung: **05.05.2021**
(21) Anmeldenummer: 16788634.0
(22) Anmeldetag: 28.10.2016
(51) Int. Cl.: F16B 25/00

(54) **BETONSCHRAUBE**
CONCRETE SCREW
VIS À BÉTON

(30) Priorität: 26.11.2015 DE 102015120470
(43) Veröffentlichungstag der Anmeldung: 03.10.2018
(73) Patentinhaber: fischerwerke GmbH & Co. KG, 72178 Waldachtal (DE)
(72) Erfinder: WEICHERT, Berthold, 78658 Zimmern (DE); HACKER, Oliver, 72227 Egenhausen (DE); DIXA, Raphael, 72178 Waldachtal (DE)
(86) Internationale Anmeldenummer: PCT/EP2016/001801
(87) Internationale Veröffentlichungsnummer: WO 2017/088947

(56) Entgegenhaltungen:
- EP-A2- 1 076 185
- EP-A2- 1 936 213
- WO-A1-2004/074697
- DE-A1-102013 109 647

## Beschreibung

Die Erfindung betrifft eine Betonschraube mit den Merkmalen des Oberbegriffs des Anspruchs 1.

Betonschrauben sind bekannt als Schrauben, die in ein Bohrloch in einem mineralischen Verankerungsgrund eingedreht werden können und beim Eindrehen in die Wand des Bohrlochs ein zu einem Gewindegang der Betonschraube komplementäres Innengewinde einschneiden. In diesem Zusammengang ist unter "Einschneiden" weniger ein Durchtrennen, als vielmehr ein Abtragen, Reiben oder Schleifen zu verstehen. Ein mineralischer Verankerungsgrund besteht beispielsweise aus Beton, Mauerwerk oder Naturstein. Mit einer Betonschraube kann ein Anbauteil an einem mineralischen Verankerungsgrund befestigt werden, beispielsweise eine Metallkonsole an einer Wand aus Beton.

Aus der Patentschrift DE 10 2006 037 006 B4 ist eine Betonschraube bekannt, die aus einem Schaft und einem Schraubenkopf besteht, wobei am Schaft ein Gewindeabschnitt ausgebildet ist, der in ein vorderes Schneidgewinde und ein hinteres Traggewinde unterteilt werden kann. Um ein gutes Tragverhalten der Betonschraube mit einem leichtgängigen Eindrehen in den Verankerungsgrund zu verbinden, sind der Durchmesser und die Breite des Schneidgewindes der Betonschraube 2% bis 4% größer als der Durchmesser und die Breite des Traggewindes.

Weiterhin zeigt die EP 1 936 213 A2 ein Befestigungselement für mineralische Untergründe mit einenem Schaft mit einem sich bereichsweise entlang des Schafts erstreckenden, gewindefurchenden Gewinde mit seitlichen Flanken sowie mit einem Drehangriffsmittel für ein Setzwerkzeug. Der Winkel der Flanken beträgt 10° bis 35°, das Verhältnis des Aussendurchmessers des Gewindes zu dem Kerndurchmesser des Schafts beträgt 1.1 bis 1.4 und das Verhältnis des Aussendurchmessers des Gewindes zu der Steigung des Gewindes (21) beträgt 1.4 bis 1.7.

Aufgabe der Erfindung ist, eine alternative Betonschraube zu schaffen, die ein verbessertes Setzverhalten sowie ein gutes Tragverhalten kombiniert.

Diese Aufgabe wird erfindungsgemäß durch eine Betonschraube mit den Merkmalen des Anspruchs 1 gelöst. Die erfindungsgemäße Betonschraube weist einen Schraubenkopf und einen Schaft auf. Der Schraubenkopf weist einen Werkzeugsitz mit Werkzeugangriffsflächen auf, an den ein Werkzeug zum Eindrehen der Betonschraube in ein Bohrloch angesetzt werden kann, sowie insbesondere einen gegenüber dem Schaft vergrößerten Außendurchmesser. Der Schraubenkopf ist beispielsweise als Sechskantkopf mit angeformter Unterlegscheibe zur Anlage an einem Anbauteil ausgebildet, wobei als Werkzeugsitz der Sechskant dient. Alternativ oder in Kombination kann am Schraubenkopf beispielsweise ein Innenmehrkant ausgebildet sein. Der Schraubenkopf kann auch so gestaltet sein, dass der Außendurchmesser nicht, oder jedenfalls nicht wesentlich, gegenüber dem Schaft vergrößert ist. Insbesondere weist eine derartige erfindungsgemäße Betonschraube einen Werkzeugsitz mit Innenmehrkant oder Innenstern auf. Der Schaft erstreckt sich vom Schraubenkopf entlang einer Längsachse bis zu einem Einführende, mit dem voran die Betonschraube in Einbringrichtung planmäßig in ein Bohrloch in einem Verankerungsgrund eingebracht wird. Am Schaft der Betonschraube ist ein Gewindeabschnitt ausgebildet, insbesondere ausgehend vom Einführende nur über einen Teil des Schafts und/oder mit Abstand zum Schraubenkopf. Der Gewindeabschnitt besteht aus einem Kern, der insbesondere über einen wesentlichen Teil seiner Längserstreckung eine zylindrische Form aufweist, und mindestens einem den Kern wendelartig umlaufenden Gewindegang. Der Gewindeabschnitt umfasst einen Schneidabschnitt zum Einschneiden eines Innengewindes in einen mineralischen Verankerungsgrund und einen zwischen dem Schneidabschnitt und dem Schraubenkopf angeordneten Tragabschnitt. Der "Schneidabschnitt" ist somit der Abschnitt, mit dem der Gewindegang das komplementäre Innengewinde vollständig oder in wesentlichen Teilen in die Bohrlochwand einschneidet. Der Gewindeabschnitt ist derart ausgebildet, dass der Durchmesser des Schneidabschnitts maximal 5% größer als der Durchmesser des Tragabschnitts ist. Der Durchmesser des Schneidabschnitts ist größer als der Durchmesser des Tragabschnitts. Weiterhin weist die Betonschraube sowohl im Schneidabschnitt als auch im Tragabschnitt einen konstanten Durchmesser auf, wobei der Schneidabschnitt einen größeren Durchmesser als der Tragabschnitt aufweist und an den Enden des Schneid- bzw. des Tragabschnitts Übergangsbereiche vorhanden sein können, in denen der Durchmesser zu- oder abnimmt. Mit "Durchmesser" ist hier der Durchmesser eines den Schneidabschnitt bzw. den Tragabschnitt umschreibenden Zylinders gemeint, dessen Längsachse identisch mit der Längsachse des Schafts der Betonschraube ist.

Kennzeichnend für die erfindungsgemäße Betonschraube ist, dass der Gewindegang, bezogen auf die Mantelfläche eines den Kern umgebenden Prüfzylinders, im Schneidabschnitt eine in Richtung der Längsachse gemessene Breite aufweist, die mindestens 10%, insbesondere mindestens 15% größer als seine Breite im Tragabschnitt ist. Die Breite entspricht somit dem Abstand des in Einbringrichtung vorderen Anfangs- und des hinteren Endpunkts der Kurve, die am Gewindegang entsteht, wenn die Schnittebene eines Axialschnitts durch die Betonschraube, also einer Radialebene zur Längsachse, mit der Mantelfläche des Prüfzylinders geschnitten wird.

Der Prüfzylinder ist ein imaginärer Zylinder, dessen Längsachse identisch mit der Längsachse der Betonschraube ist. Der Durchmesser des Prüfzylinders ist gleich dem Nenndurchmesser der Betonschraube, der wiederum gleich dem Nenndurchmesser des Bohrlochs ist, der dem auf ganze Millimeter abgerundeten Durchmesser des Bohrlochs entspricht, in das die Betonschraube planmäßig eingebracht wird. Beispielsweise wird eine Betonschraube mit Nenndurchmesser 10 mm planmäßig in ein Bohrloch mit Nenndurchmesser 10 mm eingedreht, das einen Ist-Durchmesser von etwas mehr als 10 mm aufweist, wobei die Form regelmäßig von einem perfekten Zylinder abweicht. Insbesondere entspricht der Nenndurchmesser dem auf ganze Millimeter aufgerundeten Durchmesser des Kerns des Gewindeabschnitts. Der Nenndurchmesser muss dabei nicht mit einer Durchmesserangabe übereinstimmen, die zur Bezeichnung der Schraube dient.

Eine erfindungsgemäß ausgebildete Betonschraube weist ein gutes Eindrehverhalten auf, d.h. das zum Eindrehen der Schraube in ein Bohrloch erforderliche Drehmoment ist relativ gering, da aufgrund der relativ großen Breite des Gewindegangs im Schneidabschnitt das in den Verankerungsgrund eingeschnittene Innengewinde relativ weit ist, so dass das Traggewinde beim Eindrehen der Schraube nur wenig an den Gewindeflanken des eingeschnittenen Innengewindes reibt. Trotzdem liegt das Traggewinde bei Zugbelastung aufgrund der Verformung der Schraube bzw. des Verankerungsgrunds an den Flanken des eingeschnittenen Innengewindes an, derart, dass es zu einer guten Lastverteilung kommt, so dass die Tragfähigkeit der erfindungsgemäßen Betonschraube ebenfalls gut ist.

Bei einer bevorzugten Ausgestaltungsform der erfindungsgemäßen Betonschraube ist die Querschnittsfläche mindestens eines Teils des Gewindegangs im Schneidabschnitt, die außerhalb des Prüfzylinders liegt, mindestens 20%, insbesondere mindestens 25%, insbesondere mindestens 30% größer als die Querschnittsfläche mindestens eines Teils des Gewindegangs im Tragabschnitt, die außerhalb des Prüfzylinders liegt, wobei die Querschnittsfläche durch ein Dreieck angenähert ist, bei dem die jeweilige Breite des Gewindes die Grundseite und der Abstand der Grundseite bis zu dem Punkt der Querschnittsfläche, der von der Längsachse am weitesten beabstandet ist, die Höhe des Dreiecks bildet. Dabei liegt die jeweilige Querschnittsfläche, ebenso wie die Breite, in einer Radialebene zur Längsachse.

Zudem oder alternativ ist bevorzugt, dass die reale Querschnittsfläche mindestens eines Teils des Gewindegangs im Schneidabschnitt, die außerhalb des Prüfzylinders liegt, mindestens 20%, insbesondere mindestens 25%, insbesondere mindestens 30% größer als die reale Querschnittsfläche mindestens eines Teils des Gewindegangs im Tragabschnitt ist, die außerhalb des Prüfzylinders liegt. Mit "realer Querschnittsfläche" ist die Querschnittsfläche gemeint, die in einem Axialschnitt, also in einer Radialebene zur Längsachse von einer die äußeren Kontur des Gewindegangs umhüllenden Hüllkurve und von der durch einen Schnitt der Radialebene mit der Mantelfläche des Prüfzylinders erzeugten Kurve umschlossen ist.

Ist die angenäherte bzw. die reale Querschnittsfläche des Gewindegangs im Schneidabschnitt und/oder im Tragabschnitt nicht gleichbleibend, so ist für den Schneidabschnitt die maximale Querschnittsfläche in dem in Einbringrichtung vorderen Drittel des Gewindegangs und für den Tragabschnitt die maximale Querschnittsfläche des Gewindegangs in der in Einbringrichtung hinteren Hälfte des Gewindegangs maßgebend.

Eine gegenüber dem Tragabschnitt vergrößerte Querschnittsfläche des Gewindegangs des Schneidabschnitts stellt sicher, dass der Querschnitt des Gewindegangs des Innengewindes, der vom Gewindegang des Schneidabschnitts in die Bohrlochwand eingeschnitten wird, größer als der Querschnitt des Gewindegangs des Tragabschnitts ist. Damit ist die zwischen dem Gewindegang des Tragabschnitts und dem eingeschnittenen Innengewinde wirkende Reibung stark reduziert, wodurch sich die Betonschraube leicht in ein Bohrloch eindrehen lässt.

Weiterhin ist bevorzugt, dass der Flankenwinkel des Gewindegangs im Schneidabschnitt größer als der Flankenwinkel des Gewindegangs im Tragabschnitt ist. Insbesondere ist der Flankenwinkel des Gewindegangs im Schneidabschnitt mindestens 5%, insbesondere mindestens10% größer als der Flankenwinkel des Gewindegangs im Tragabschnitt. Damit wird erreicht, dass die Breite und somit auch die Querschnittsfläche des Gewindegangs im Schneidabschnitt größer als im Tragabschnitt ist.

Erfindungsgemäß beträgt das Verhältnis des Durchmessers des Gewindegangs im Schneidabschnitt zum Durchmesser des Kerns im Schneidabschnitt 1,20 bis 1,45. Mit "Durchmesser" des Kerns ist hier der Durchmesser eines den Kern umschreibenden Zylinders gemeint, dessen Längsachse identisch mit der Längsachse des Schafts der Betonschraube ist. Zudem beträgt das Verhältnis des Durchmessers des Gewindegangs im Schneidabschnitt zur Steigung des Gewindegangs im Schneidabschnitt 1,30 bis 1,50, insbesondere 1,35 bis 1,45. Beide Ausgestaltungsformen ergeben für sich und besonders in Kombination ein ausgewogenes Verhältnis von geringem Drehmoment beim Eindrehen der Betonschraube in ein Bohrloch zum Tragverhalten der Betonschraube.

Vorzugsweise nimmt der Durchmesser des Gewindegangs vom Einführende über eine Länge in Richtung der Längsachse zum Schraubenkopf hin bis zu einem maximalen Durchmesser des Gewindegangs im Schneidabschnitt zu, die dem 0,75 bis 1,25-fachen, insbesondere dem 0,9 bis 1,1-fachen der Steigung des Gewindegangs im Schneidabschnitt entspricht. Dies gewährleistet, dass die Betonschraube zum Einschrauben an einem Bohrloch gut angesetzt und anfänglich leichtgängig eingedreht werden kann, trotzdem aber auch das Schneidgewinde zur Tragfähigkeit der Schraube beitragen kann.

Vorzugsweise ist im Schneidabschnitt mindestens eine Kerbe in den Gewindegang eingeprägt, die die Höhe des Gewindegangs lokal um mindestens 50%, insbesondere um mindestens 60% reduziert. Durch die Kerbe wird eine Schneidfläche gebildet, die sich in Eindrehrichtung hinter der Kerbe befindet und das Einschneiden des Innengewindes in die Bohrlochwand erleichtert. Für ein leichtgängiges Eindrehen ist insbesondere bevorzugt, dass die Schneidfläche um 5° bis 15°, insbesondere um 10° zur radialen Richtung und insbesondere entgegen der Eindrehrichtung geneigt ist.

Die Erfindung wird nachfolgend anhand eines Ausführungsbeispiels näher erläutert.

Es zeigen:
- Figur 1: eine erfindungsgemäße Betonschraube in einer Seitenansicht;
- Figur 2: die erfindungsgemäße Betonschraube in einem Axialschnitt;
- Figur 3: eine vergrößerte Darstellung des Details III der Figur 2; und
- Figur 4: eine Vorderansicht der Betonschraube.

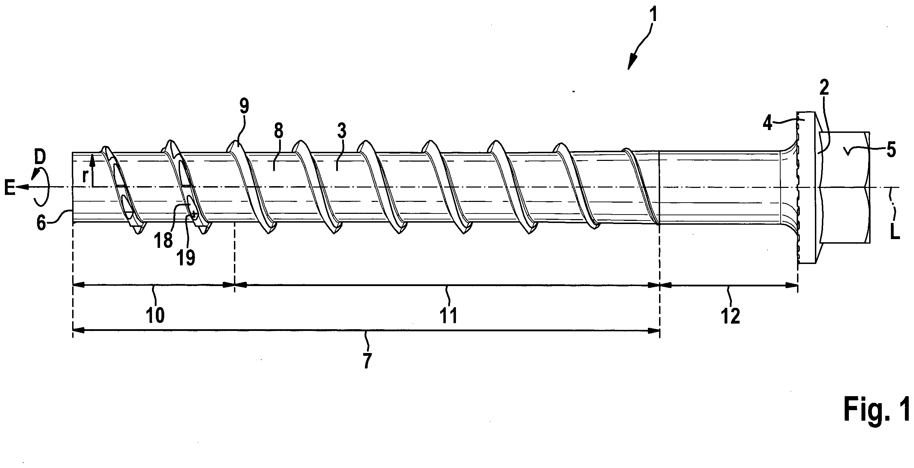

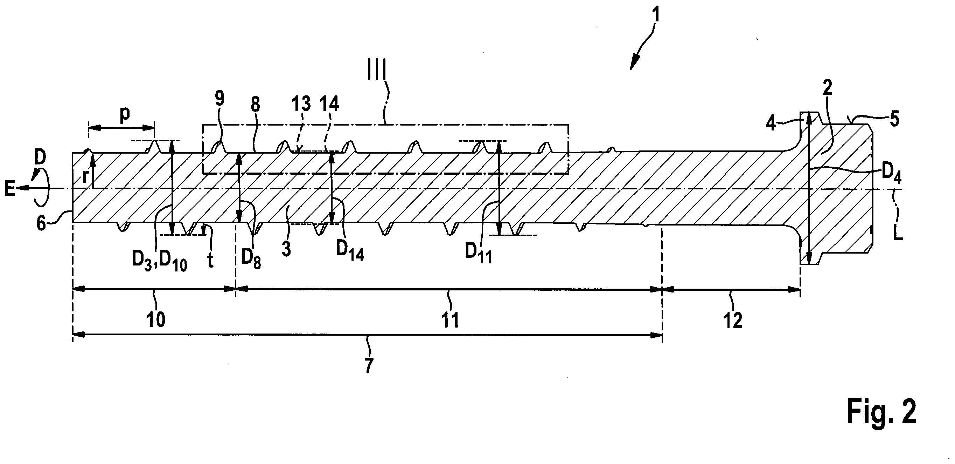

Die in den Figuren 1 bis 4 dargestellte erfindungsgemäße Betonschraube 1 umfasst einen Schraubenkopf 2 und einen Schaft 3. Der Schraubenkopf 2 ist als Sechskantkopf mit angeformter Unterlegscheibe 4 ausgebildet, wobei der Sechskantkopf Schlüsselflächen 5 als Werkzeugsitz für ein nicht dargestelltes Werkzeug zum Eindrehen der Betonschraube 1 in ein Bohrloch in einem mineralischen Verankerungsgrund (nicht dargestellt) aufweist. Insbesondere die angeformte Unterlegscheibe 4 weist einen Durchmesser D₄ auf, der größer als der Durchmesser D₃ des Schafts 3 ist. Der Schaft 3 erstreckt sich vom Schraubenkopf 2 entlang einer Längsachse L bis zu einem in Einbringrichtung E der Betonschraube 1 vorderen Einführende 6. Am Schaft 3 ist ein Gewindeabschnitt 7 ausgebildet, mit einem Kern 8 und einem den Kern 8 wendelartig umlaufenden Gewindegang 9, der sich in einen vorderen Schneidabschnitt 10 und einen Tragabschnitt 11 unterteilt. Der Tragabschnitt 11 ist zwischen dem Schneidabschnitt 10 und dem Schraubenkopf 2 angeordnet und grenzt an den Schneidabschnitt 10 an bzw. geht in diesen kontinuierlich über. Zwischen dem in Einbringrichtung E hinteren Ende des Tragabschnitts 11 und dem Schraubenkopf 2 befindet sich ein gewindefreier Übergangsabschnitt 12, der sich im Durchmesser leicht konisch zum Schraubenkopf 2 hin erweitert, während der Kern 8 des Gewindeabschnitts 7 im Wesentlichen zylindrisch ist. Somit entspricht der Durchmesser D₈ des Kerns 8 im Schneidabschnitt 10 dem im Tragabschnitt 11. Der Gewindegang 9 des Schneidabschnitts 10 weist einen Durchmesser D₁₀ auf, der 4% größer ist, als der Durchmesser D₁₁ des Gewindegangs 9 Schneidabschnitt 10 zum Durchmesser des Kerns 8 beträgt 1,3, während das Verhältnis des Durchmessers D₁₀ des Gewindegangs 9 im Schneidabschnitt 10 zur Steigung p des Gewindegangs 9 im Schneidabschnitt 10 einen Wert von 1,4 beträgt.

Der Gewindegang 9 weist im Schneidabschnitt 10 eine Form auf, die von der des Tragabschnitts 11 abweicht. Der Flankenwinkel α₁₀ beträgt im Schneidabschnitt 48°, während der Flankenwinkel α₁₁ im Tragabschnitt 44° beträgt. Da der Gewindegang 9 im Schneidabschnitt 10 zudem geringfügig höher als im Tragabschnitt 11 ist, ist der Gewindegang 9 im Schneidabschnitt 10 zum Kern 8 hin breiter als im Tragabschnitt 11, so dass auch die Querschnittsfläche A₁₀ des Gewindegangs 9 größer als die Querschnittsfläche A₁₁ des Gewindegangs 9 im Tragabschnitt 11 ist. Bezogen auf die Mantelfläche 13 eines imaginären, den Kern 8 umgebenden Prüfzylinders 14, dessen Symmetrieachse die Längsachse L der Betonschraube 1 bildet, ist die Breite B₁₀ im Schneidabschnitt 10 mindestens 10%, bei der abgebildeten Betonschraube 1 circa 15% größer als die Breite B₁₁ im Tragabschnitt 11. Die Breite B₁₀, B₁₁ ist die parallel zur Längsachse L gemessene Länge der Kurve, die sich als Schnitt der Mantelfläche 13 des Prüfzylinders 14 mit der Axialebene, also einer Radialebene zur Längsachse L, die die Betonschraube 1 axial schneidet, ergibt. Der Prüfzylinder 14 weist einen Durchmesser D₁₄ auf, der gleich dem Nenndurchmesser der Betonschraube 1 ist. Die dargestellte Betonschraube 1 weist einen Durchmesser D₈ des Kerns 8 von 9,4 mm auf und ist planmäßig zum Eindrehen in ein Bohrloch vorgesehen, das einen Nenndurchmesser von 10 mm aufweist, wobei der tatsächliche Durchmesser eines mit handelsüblichen Bohrhämmern in einem mineralischen Verankerungsgrund gebohrten Bohrlochs etwas größer ist, nämlich ungefähr zwischen 10,1 mm und 10,5 mm. Der Nenndurchmesser der Betonschraube 1 beträgt somit 10 mm.

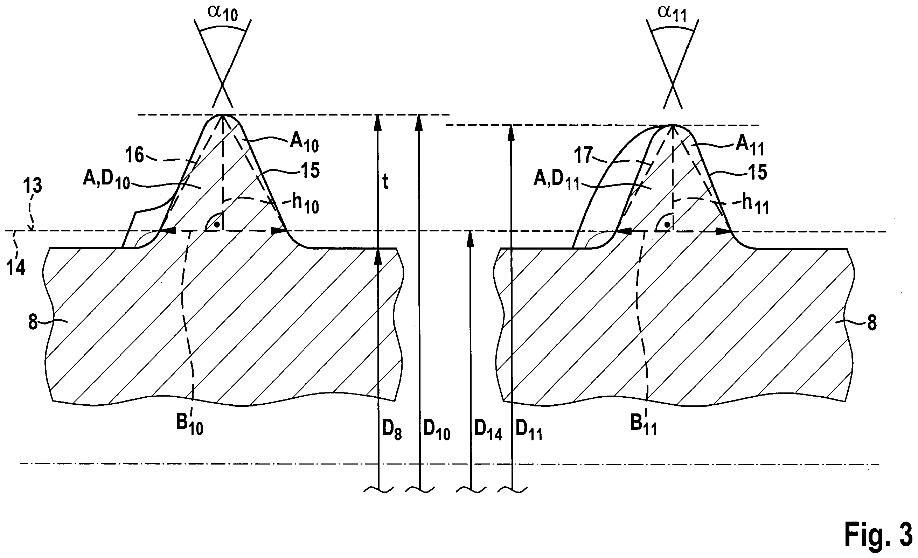

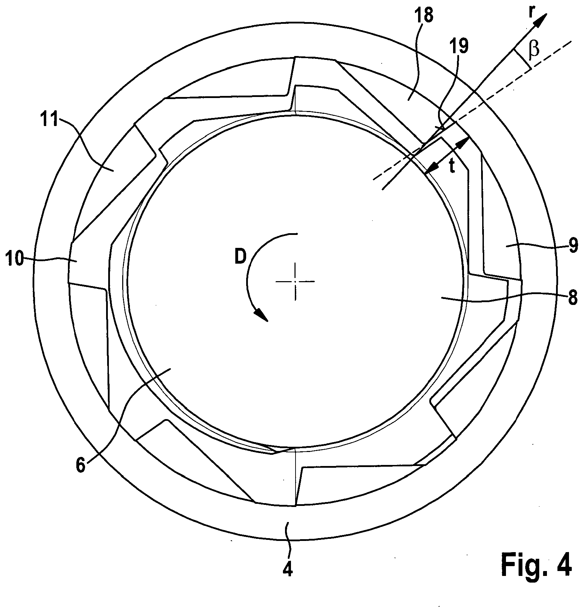

Die Querschnittsfläche A₁₀ des Gewindegangs 9 im Schneidabschnitt 10 ist um mindestens 20% größer als im Tragabschnitt 11. Dieses Verhältnis wird bei der in den Figuren dargestellten Betonschraube 1 für das Verhältnis der realen Querschnittsflächen A₁₀, A₁₁ als auch für die durch ein Dreieck 16, 17 (gestrichelt gezeichnet) angenäherte Querschnittsfläche A_{D10}, A_{D11} erfüllt. Die realen Querschnittsflächen A₁₀, A₁₁ sind die Flächen, die im Axialschnitt der Figuren 3 und 4 von der die äußere Kontur des Gewindegangs 9 umhüllenden Hüllkurve 15 und von der durch einen Schnitt der Radialebene des Axialschnitts mit der Mantelfläche 13 des Prüfzylinders 14 erzeugten Kurve, die hier mit der die Breite B₁₀, B₁₁ darstellenden Gerade identisch ist, umschlossen ist, und radial außerhalb des Prüfzylinders 14 liegen.

Die Grundseiten der Dreiecke 16, 17, mit denen die realen Querschnittsflächen A₁₀, A₁₁ durch die dreiecksförmigen Querschnittsfläche A_{D10}, A_{D11} angenähert werden können, werden durch die Breiten B₁₀, B₁₁ gebildet, während der Abstand der Grundseite bis zu dem Punkt des Gewindegangs 9, der von der Längsachse L am weitesten beabstandet ist, die Höhe h₁₀, h₁₁ des Dreiecks 16, 17 bildet. Bei der dargestellten Betonschraube 1 sind die realen Querschnittsflächen A₁₀, A₁₁ größer als die durch die Dreiecke 16, 17 angenäherten Querschnittsflächen A_{D10}, A_{D11}.

Um das Ansetzen der Betonschraube 1 an einem Bohrloch und das Einschneiden des Gewindegangs 9 in die Bohrlochwand zu erleichtern, steigt der Durchmesser des Gewindegangs 9 in radialer Richtung r vom Einführende 6 in Richtung der Längsachse L zum Schraubenkopf 2 hin über eine Länge bis zum maximalen Durchmesser D₁₀ des Gewindegangs 9 im Schneidabschnitt 10 an, die dem 1,0-fachen der Steigung p des Gewindegangs 9 entspricht. Zudem sind am Gewindegang 9 mehrere Kerben 18 eingeprägt, die die Höhe t des Gewindegangs 9 lokal jeweils um circa 60% reduzieren. Die Kerben 18 sind dreiecksförmig, wobei die in Eindrehrichtung hinteren Seiten der dreiecksförmigen Kerben 18 jeweils eine Schneidfläche 19 bilden, die zur radialen Richtung um 10° gegen die Eindrehrichtung D geneigt sind.

Aufgrund ihrer erfindungsgemäßen Ausgestaltung weist die Betonschraube 1 ein verbessertes Setzverhalten sowie ein gutes Tragverhalten auf.

### Bezuaszeichenliste

- 1: Betonschraube
- 2: Schraubenkopf
- 3: Schaft
- 4: Unterlegscheibe
- 5: Schlüsselfläche
- 6: Einführende
- 7: Gewindeabschnitt
- 8: Kern
- 9: Gewindegang
- 10: Schneidabschnitt
- 11: Tragabschnitt
- 12: Übergangsabschnitt
- 13: Mantelfläche
- 14: Prüfzylinder
- 15: Hüllkurve
- 16: Dreieck im Schneidabschnitt 10
- 17: Dreieck im Tragabschnitt 11
- 18: Kerbe
- 19: Schneidfläche
- A₁₀: Querschnittsfläche im Schneidabschnitt 10
- A₁₁: Querschnittsfläche im Tragabschnitt 11
- A_{D10}: dreiecksförmig angenäherte Querschnittsfläche im Schneidabschnitt 10
- A_{D11}: dreiecksförmig angenäherte Querschnittsfläche im Tragabschnitt 11
- B₁₀: Breite des Gewindegangs 9 im Schneidabschnitt 10
- B₁₁: Breite des Gewindegangs 9 im Tragabschnitt 11
- D: Drehrichtung
- D₃: Durchmesser des Schafts 3
- D₄: Durchmesser der Unterlegscheibe 4
- D₈: Durchmesser des Kerns 8
- D₁₀: Durchmesser des Schneidabschnitts 10
- D₁₁: Durchmesser des Tragabschnitts 11
- D₁₄: Durchmesser des Prüfzylinders 14
- E: Einbringrichtung
- h₁₀: Höhe des Dreiecks im Schneidabschnitt 10
- h₁₁: Höhe des Dreiecks im Tragabschnitt 11
- L: Längsachse
- p: Steigung des Gewindegangs 9
- r: radiale Richtung
- t: Höhe des Gewindegangs 9 im Schneidabschnitt 10
- α₁₀: Flankenwinkel im Schneidabschnitt 10
- α₁₁: Flankenwinke im Tragabschnitt 11
- β: Neigungswinkel der Schneidfläche

## Patentansprüche

1. Betonschraube (1) mit einem Schraubenkopf (2) und einem Schaft (3), der sich vom Schraubenkopf (2) entlang einer Längsachse (L) bis zu einem Einführende (6) erstreckt,
wobei am Schaft (3) ein Gewindeabschnitt (7) ausgebildet ist, mit einem Kern (8) und einem den Kern (8) wendelartig umlaufenden Gewindegang (9), und
wobei der Gewindeabschnitt (7) einen Schneidabschnitt (10) zum Einschneiden in einen mineralischen Verankerungsgrund und einen zwischen dem Schneidabschnitt (10) und dem Schraubenkopf (2) angeordneten Tragabschnitt (11) umfasst, wobei der Durchmesser (D₁₀) des Schneidabschnitts (10) maximal 5% größer als der Durchmesser (D₁₁) des Tragabschnitts (11) ist,
wobei das Verhältnis des Durchmessers (D₁₀) des Gewindegangs (9) im Schneidabschnitt (10) zum Durchmesser (D₈) des Kerns (8) im Schneidabschnitt (10) 1,20 bis 1,45 beträgt, und
wobei das Verhältnis des Durchmessers (D₁₀) des Gewindegangs (9) im Schneidabschnitt (10) zur Steigung (p) des Gewindegangs (9) im Schneidabschnitt (10) 1,30 bis 1,50 beträgt,
**dadurch gekennzeichnet,**
**dass** die Betonschraube (1) sowohl im Schneidabschnitt (10) als auch im Tragabschnitt (11) einen konstanten Durchmesser (D₁₀, D₁₁) aufweist, wobei der Durchmesser (D₁₀) des Schneidabschnitts (10) größer als der Durchmesser (D₁₁) des Tragabschnitts (11) ist, und
**dass** der Gewindegang (9), bezogen auf die Mantelfläche (13) eines den Kern (8) umgebenden Prüfzylinders (14), im Schneidabschnitt (10) eine in Richtung der Längsachse (L) gemessene Breite (B₁₀) aufweist, die im Schneidabschnitt (10) gleichbleibend ist und die mindestens 10% größer als seine Breite (B₁₁) im Tragabschnitt (11) ist, wobei die Breite (B₁₁) im Tragabschnitt (11) ebenfalls gleichbleibend ist, wobei der Durchmesser (D₁₄) des Prüfzylinders (14) gleich dem Nenndurchmesser der Betonschraube (1) ist.

2. Betonschraube gemäß Anspruch 1, **dadurch gekennzeichnet, dass** die Querschnittsfläche (A_{D10}) mindestens eines Teils des Gewindegangs (9) im Schneidabschnitt (10), die außerhalb des Prüfzylinders (14) liegt, mindestens 20% größer als die Querschnittsfläche (A_{D11}) mindestens eines Teils des Gewindegangs (9) im Tragabschnitt (11) ist, die außerhalb des Prüfzylinders (14) liegt, wobei die Querschnittsfläche (A_{D10}, A_{D11}) durch ein Dreieck (16, 17) angenähert ist, bei dem die jeweilige Breite (B₁₀, B₁₁) des Gewindegangs (9) die Grundseite und der Abstand der Grundseite bis zu dem Punkt der Querschnittsfläche (A_{D10}, A_{D11}), der von der Längsachse (L) am weitesten beabstandet ist, die Höhe (h₁₀, h₁₁) des Dreiecks (16, 17) bildet.

3. Betonschraube gemäß Anspruch 1 oder 2, **dadurch gekennzeichnet, dass** die reale Querschnittsfläche (A₁₀) mindestens eines Teils des Gewindegangs (9) im Schneidabschnitt (10), die außerhalb des Prüfzylinders (14) liegt, mindestens 20% größer als die reale Querschnittsfläche (A₁₁) mindestens eines Teils des Gewindegangs (9) im Tragabschnitt (11) ist, die außerhalb des Prüfzylinders (14) liegt.

4. Betonschraube gemäß einem der Ansprüche 1 bis 3, **dadurch gekennzeichnet, dass** der Flankenwinkel (α₁₀) des Gewindegangs (9) im Schneidabschnitt (10) größer als der Flankenwinkel (α₁₁) des Gewindegangs (9) des Tragabschnitts (11) ist.

5. Betonschraube gemäß einem der Ansprüche 1 bis 4, **dadurch gekennzeichnet, dass** der Durchmesser des Gewindegangs (9) vom Einführende (6) über eine Länge in Richtung der Längsachse (L) zum Schraubenkopf (2) hin bis zu einem maximalen Durchmesser (D₁₀) des Gewindegangs (9) im Schneidabschnitt (10) zunimmt, die dem 0,75 bis 1,25-fachen, insbesondere dem 0,9 bis 1,1-fachen der Steigung (p) des Gewindegangs (9) im Schneidabschnitt (10) entspricht.

6. Betonschraube gemäß einem der Ansprüche 1 bis 5, **dadurch gekennzeichnet, dass** im Schneidabschnitt (10) mindestens eine Kerbe (18) in den Gewindegang (9) eingeprägt ist, die die Höhe (t) des Gewindegangs (9) lokal um mindestens 50% reduziert.

7. Betonschraube gemäß Anspruch 6, **dadurch gekennzeichnet, dass** die Kerbe (18) eine Schneidfläche (19) bildet, die um 5° bis 15°, insbesondere um 10° zur radialen Richtung geneigt ist.

## Claims

1. Concrete screw (1) having a screw head (2) and a shank (3) which extends along a longitudinal axis (L) from the screw head (2) to an insertion end (6),
wherein on the shank (3) there is formed a threaded portion (7), with a core (8) and a thread (9) running helically around the core (8), and
wherein the threaded portion (7) comprises a tapping portion (10) for tapping into a mineral anchoring substrate and a load-bearing portion (11) arranged between the tapping portion (10) and the screw head (2), the diameter (D₁₀) of the tapping portion (10) being a maximum of 5 % larger than the diameter (D₁₁) of the load-bearing portion (11),
wherein the ratio of the diameter (D₁₀) of the thread (9) in the tapping portion (10) to the diameter (D₈) of the core (8) in the tapping portion (10) is from 1.20 to 1.45, and
wherein the ratio of the diameter (D₁₀) of the thread (9) in the tapping portion (10) to the pitch (p) of the thread (9) in the tapping portion (10) is from 1.30 to 1.50,
**characterised in that**
the concrete screw (1), both in the tapping portion (10) and in the load-bearing portion (11), has a constant diameter (D₁₀, D₁₁), with the diameter (D₁₀) of the tapping portion (10) being larger than the diameter (D₁₁) of the load-bearing portion (11), and
the thread (9), in relation to the lateral surface (13) of a test cylinder (14) surrounding the core (8), has in the tapping portion (10) a width (B₁₀), measured in the direction of the longitudinal axis (L), that is constant in the tapping portion (10) and is at least 10 % larger than its width (B₁₁) in the load-bearing portion (11), the width (B₁₁) in the load-bearing portion (11) likewise being constant, and the diameter (D₁₄) of the test cylinder (14) being the same as the nominal diameter of the concrete screw (1).

2. Concrete screw according to claim 1, **characterised in that** the cross-sectional area (A_{D10}) of at least a part of the thread (9) in the tapping portion (10), said area lying outside the test cylinder (14), is at least 20 % larger than the cross-sectional area (A_{D11}) of at least a part of the thread (9) in the load-bearing portion (11), said area lying outside the test cylinder (14), with the cross-sectional area (A_{D10}, A_{D11}) being approximated by a triangle (16, 17), wherein the width (B₁₀, B₁₁) of the thread (9) in each case forms the base and the distance of the base from the point of the cross-sectional area (A_{D10}, A_{D11}) farthest distant from the longitudinal axis (L) forms the height (h₁₀, h₁₁) of the triangle (16, 17).

3. Concrete screw according to claim 1 or 2, **characterised in that** the actual cross-sectional area (A₁₀) of at least a part of the thread (9) in the tapping portion (10), said area lying outside the test cylinder (14), is at least 20 % larger than the actual cross-sectional area (A₁₁) of at least a part of the thread (9) in the load-bearing portion (11), said area lying outside the test cylinder (14).

4. Concrete screw according to any one of claims 1 to 3, **characterised in that** the flank angle (α₁₀) of the thread (9) in the tapping portion (10) is larger than the flank angle (α₁₁) of the thread (9) of the load-bearing portion (11).

5. Concrete screw according to any one of claims 1 to 4, **characterised in that** the diameter of the thread (9) increases from the insertion end (6) in the direction of the longitudinal axis (L) towards the screw head (2) up to a maximum diameter (D₁₀) of the thread (9) in the tapping portion (10) over a length which corresponds to from 0.75 to 1.25 times, especially from 0.9 to 1.1 times, the pitch (p) of the thread (9) in the tapping portion (10).

6. Concrete screw according to any one of claims 1 to 5, **characterised in that** in the tapping portion (10) at least one notch (18) is impressed in the thread (9), which notch reduces the height (t) of the thread (9) locally by at least 50 %.

7. Concrete screw according to claim 6, **characterised in that** the notch (18) forms a tapping surface (19) that is inclined by from 5° to 15°, especially by 10°, with respect to the radial direction.

## Revendications

1. Vis à béton (1) comprenant une tête (2) et une tige (3) s'étendant le long d'un axe longitudinal (L) jusqu'à une extrémité d'insertion (6), à partir de ladite tête (2) de la vis,
une région filetée (7), façonnée sur ladite tige (3), étant pourvue d'un noyau (8) et d'un filet (9) qui ceinture hélicoïdalement ledit noyau (8), et
ladite région filetée (7) étant dotée d'une zone de coupe (10) conçue pour mordre dans une base minérale d'ancrage, et d'une zone de support (11) interposée entre ladite zone de coupe (10) et la tête (2) de la vis, sachant que le diamètre (D₁₀) de ladite zone de coupe (10) est supérieur, au maximum de 5 %, au diamètre (D₁₁) de ladite zone de support (11), sachant que le rapport, entre le diamètre (D₁₀) du filet (9) dans la zone de coupe (10) et le diamètre (D₈) du noyau (8) dans ladite zone de coupe (10), est de 1,20 à 1,45, et
sachant que le rapport, entre ledit diamètre (D₁₀) du filet (9) dans la zone de coupe (10) et le pas (p) dudit filet (9) dans ladite zone de coupe (10), est de 1,30 à 1,50,
**caractérisée**
**par le fait que** ladite vis à béton (1) présente un diamètre (D₁₀, D₁₁) constant, tant dans la zone de coupe (10) que dans la zone de support (11), le diamètre (D₁₀) de ladite zone de coupe (10) étant supérieur au diamètre (D₁₁) de ladite zone de support (11) ; et
**par le fait que** le filet (9) présente dans la zone de coupe (10), par rapport à la surface (13) de l'enveloppe d'un cylindre de test (14) entourant le noyau (8), une largeur (B₁₀) qui, mesurée dans la direction de l'axe longitudinal (L), est constante dans ladite zone de coupe (10) et est supérieure, d'au moins 10 %, à sa largeur (B₁₁) dans la zone de support (11), laquelle largeur (B₁₁) est également constante dans ladite zone de support (11), le diamètre (D₁₄) dudit cylindre de test (14) étant égal au diamètre nominal de ladite vis à béton (1).

2. Vis à béton selon la revendication 1, **caractérisée par le fait que** l'aire de section transversale (A_{D10}) d'au moins une partie du filet (9) dans la zone de coupe (10), qui est située à l'extérieur du cylindre de test (14), est supérieure d'au moins 20 % à l'aire de section transversale (A_{D11}) d'au moins une partie dudit filet (9) dans la zone de support (11), qui est située à l'extérieur dudit cylindre de test (14), l'aire de section transversale (A_{D10}, A_{D11}) se présentant approximativement comme un triangle (16, 17) dans lequel la largeur respective (B₁₀, B₁₁) dudit filet (9) constitue la base et la distance, séparant ladite base d'avec le point de ladite aire de section transversale (A_{D10}, A_{D11}) le plus éloigné de l'axe longitudinal (L), constitue la hauteur (h₁₀, h₁₁) dudit triangle (16, 17).

3. Vis à béton selon la revendication 1 ou 2, **caractérisée par le fait que** l'aire effective de section transversale (A₁₀) d'au moins une partie du filet (9) dans la zone de coupe (10), qui est située à l'extérieur du cylindre de test (14), est supérieure d'au moins 20 % à l'aire effective de section transversale (A₁₁) d'au moins une partie dudit filet (9) dans la zone de support (11), qui est située à l'extérieur dudit cylindre de test (14).

4. Vis à béton selon l'une des revendications 1 à 3, **caractérisée par le fait que** l'angle de flanc (α₁₀) du filet (9), dans la zone de coupe (10), est supérieur à l'angle de flanc (α₁₁) du filet (9) de la zone de support (11).

5. Vis à béton selon l'une des revendications 1 à 4, **caractérisée par le fait que**, dans la direction de l'axe longitudinal (L), le diamètre du filet (9) croît jusqu'à un diamètre maximal (D₁₀) dudit filet (9) dans la zone de coupe (10), vers la tête (2) de ladite vis à partir de l'extrémité d'insertion (6), sur une longueur qui correspond à entre 0,75 et 1,25 fois, notamment à entre 0,9 et 1,1 fois le pas (p) dudit filet (9) dans ladite zone de coupe (10).

6. Vis à béton selon l'une des revendications 1 à 5, **caractérisée par le fait qu'**au moins une encoche (18), empreinte dans le filet (9) dans la zone de coupe (10), diminue localement d'au moins 50 % la hauteur (t) dudit filet (9).

7. Vis à béton selon la revendication 6, **caractérisée par le fait que** l'encoche (18) forme une surface de coupe (19) inclinée de 5° à 15°, notamment de 10° par rapport à la direction radiale.
